# EUROPÄISCHE PATENTANMELDUNG

(11) **EP 0 865 811 A1**
(43) Veröffentlichungstag der Anmeldung: **23.09.1998**
(21) Anmeldenummer: 98104829.1
(22) Anmeldetag: 17.03.1998
(51) Int. Cl.: B01D 19/02, B01J 19/00

(54) **Verfahren zur Schaumzerstörung bei der Herstellung von Polymerdispersionen**

(30) Priorität: 17.03.1997 DE 19711021
(71) Anmelder: BASF AKTIENGESELLSCHAFT, 67056 Ludwigshafen (DE)
(72) Erfinder: Rupaner, Robert, Dr., 67158 Ellerstadt (DE); Lawrenz, Sven, 68161 Mannheim (DE); Schuchmann, Heike, Dr., 71665 Vaihingen (DE); Bauer, Gerhard, Dr., 69469 Weinheim (DE); Heider, Wolfgang, 67434 Neustadt (DE)
(74) Vertreter: Kinzebach, Werner, Dr.

(57) **Zusammenfassung**

Die Erfindung betrifft ein Verfahren zur Schaumzerstörung bei der Herstellung von Polymerdispersionen, wobei man einen mechanischen rotierende Schaumzerstörer (10) verwendet, der den Schaum ansaugt und verdichtet, oder der den Schaum und/oder eine Flüssigkeit ansaugt und radial auf den Schaum auf der Polymerdispersion schleudert.

## Beschreibung

Die Erfindung betrifft ein Verfahren zur Schaumzerstörung bei der Herstellung von Polymerdispersionen unter Verwendung von mechanischen Schaumzerstörern. Die "Herstellung" von Polymerdispersionen umfaßt im vorliegenden Zusammenhang im weitesten Sinne sowohl die Vorbehandlung und die Vorstufen der Polymerisation als auch die eigentliche Polymerisation und die Nachbehandlung, beispielsweise das Entschäumen von tensidreichen Polymerdispersionen während der Herstellung, von Polymerdispersionen während der Nachbehandlung, von Polymerdispersionen beim Entspannen auf Normaldruck, von Polymerdispersionen bei deren Einlaufen oder Einsprühen in evakuierte Behälter oder das Entschäumen beim Emulgieren von Monomeren mit Tensiden.

Schaumbildung kann bei chemischen, biologischen und verfahrenstechnischen Prozessen auftreten. Dies gilt insbesondere für die im allgemeinen stark tensidhaltigen und gerührten Emulsions-, Lösungs- oder Suspensionspolymerisate. Schäume sind unerwünscht, weil sie im allgemeinen die Funktion von Sensoren stören können, zu einer Verklebung und Verschmutzung der Reaktorwände führen, was einen erhöhten Reinigungsaufwand bedingt und eine Erhöhung der Cycluszeit durch Verzögerungen beim Konfektionieren oder Befüllen von Behältern zur Folge haben können. Häufig werden deshalb auch größere Behälter verwendet, was die genannten Probleme aber nur zum Teil beseitigt. Diese Nachteile spielen besonders bei Polymerisatdispersionen eine wichtige Rolle.

Man hat daher die schaumbildenden Prozesse untersucht und Methoden zur Beseitigung von unerwünschten Schäumen bzw. zur Vermeidung der Schaumbildung entwickelt. Eine Vielzahl von Testverfahren wurde ausgearbeitet (vgl. z. B. Measurement of Foaminess of Water-Reducible Coating Polymer Solutions, J. Kozakiewics et al., Journal of Coatings Technology, Bd. 65, (1993), S. 47 - 52). Eine vollständige Erklärung der sich abspielenden Vorgänge ist aber bisher nicht möglich, und für viele Probleme konnte noch keine Lösung gefunden werden.

Üblicherweise begegnet man dem Schaumproblem durch Zusatz von Antischaummitteln. Eine Vielzahl von unterschiedlichen Substanzklassen sind hierfür verfügbar (s. Defoaming, P. R. Garrett, Surfactant Science Series, Bd. 45, Marcel Dekker, Inc., New York (1993)). Das allgemeine Funktionsprinzip derartiger Verbindungen besteht darin, daß diese Substanzen amphiphilen Charakter haben und aus sperrigen Molekülen bestehen, sich mit normalen Tensidmolekülen nicht mischen und im Reaktionsmedium praktisch unlöslich sind. Diese Moleküle werden in die stabilisierenden Grenzflächenfilme (Schaumlamellen) der Schaumblasen eingebaut und erzeugen dort Sollbruchstellen, welche die Elastizität der Filme stark herabsetzen (Marangoni-Effekt), was zu einer schnellen und sicheren Zerstörung der Schäume bzw. Verminderung der Schaumbildung führt. Es zeigt sich aber, daß bei gewissen Anwendungen, insbesondere bei Beschichtungen auf Basis von Polymerdispersionen, solche Verbindungen sich häufig störend bemerkbar machen, z. B. durch Fischaugenbildung. Nachteilig ist der Zusatz von Antischaummitteln auch wegen der hohen Kosten dieser Mittel.

Eine weitere Möglichkeit, unerwünschte Schäume zu beseitigen, besteht in der mechanischen Zerstörung und Beseitigung des Schaums. Man hat im Bereich der Biotechnologie beispielsweise im Falle von Reaktionssystemen, die häufig mit Luft oder anderen Gasen begast werden müssen und daher stark zum Schäumen neigen, die Reaktoren, in denen diese biotechnischen Reaktionen durchgeführt werden, mit sogenannten mechanischen Schaumzerstörern ausgerüstet.

Vielen dieser Geräte ist gemeinsam, daß sie in den Reaktor eingebaut werden, oberhalb der Flüssigkeitsoberfläche rotieren, gebildeten Schaum ansaugen, ihn umlenken und radial, d. h. parallel zur Flüssigkeitsoberfläche herausschleudern. Die beschleunigten Tropfen lassen dabei weiteren Schaum durch die Einwirkung der mechanischen Energie zerplatzen.

Bei einem anderen Konstruktionstyp fließt der Schaum in den Schaumzerstörer und wird ebenfalls seitlich weggeschleudert.

Bei einem weiteren Typ wird der Schaum verdichtet, bis letztlich eine nahezu schaumfreie Flüssigkeit übrigbleibt, die der Reaktionslösung wieder zuläuft.

M. Zlokarnik beschreibt in Chem.-Ing.-Tech. 56 (1984), S. 839-844 einen kegelförmigen mechanischen Schaumzerstörer, welcher die Zentrifugalkraft und aufgrund der kreisrunden Kanäle auch die Coriolis-Kraft zum Verdichten des Schaums einsetzt. Dieser Schaumzerstörer wird gemäß dieser Veröffentlichung entweder direkt in den Reaktor oder in eine Schaumzerstörungskammer eingebaut. Im Abschnitt 1 dieser Veröffentlichung werden zwar im ersten Absatz bei der Diskussion der bekannten Schaumprobleme beispielhaft die Schwierigkeiten erwähnt, die oft mit dem Austreiben von Restpolymeren nach beendeter Emulsionspolymerisation (Buna-Herstellung) einhergehen; als Einsatzgebiete des Zlokarnik-Schaumzerstörers werden aber nur Bioreaktoren und mikrobiologische Prozesse aufgeführt (s. z. B. S. 840, linke Spalte, Mitte und S 843, rechte Spalte, Absatz 2). Der Schaumzerstörer wurde für Bioreaktoren verfahrenstechnisch optimiert.

Ein weiteres Beispiel für einen Schaumzerstörer ist der EKATO-Foamjet (Firmenschrift EKATO; Handbuch der Rührtechnik (1990), Seiten SF6-SF8), dessen Wirkungsweise auf einer Kombination aus mechanischer und chemischer Schaumzerstörung (Zusatz von Antischaummitteln) beruht (s. SF7. Absatz 3).

Weitere Schaumzerstörer werden in der Veröffentlichung "Verfahrenstechnische Berechnungsmethoden", Bd. 4, Verlag Chemie (1988), auf Seiten 208 und 209 behandelt. Erwähnt werden unter anderen Zyklone, Franz-Kreisel und der Schaumzerstorer FUNDAFOM. Zyklone erfordern einen hohen Vordruck, außerdem kann es in ihnen zum Nachschäumen kommen. Franz-Kreisel saugen nur Schäume mit guter Fließfähigkeit an. Der Apparat FUNDAFOM arbeitet mit Vordrücken von 10 bis 20 kPa. Hierzu ist eine Vorverdichtung der Zuluft notwendig.

Bei Polymerisatdispersionen wurden die herkömmlichen Methoden zur Schaumzerstörung bisher aufgrund der damit verbundenen Nachteile, wie Koagulatbildung bei Einarbeitung und Fischaugenbildung bei der Applikation im Falle des Zusatzes von chemisch wirkenden, teuren Antischaummitteln bzw. der Koagulat- und Stippenbildungsgefahr von mechanisch wirkenden Schaumzerstörern nicht in Betracht gezogen.

Der vorliegenden Erfindung liegt daher die Aufgabe zugrunde, eine Methode zur Beseitigung bzw. Verringerung der Schaumbildung bei Polymerisatdispersionen zur Verfügung zu stellen.

Überraschenderweise wurde nun gefunden, dass diese Aufgabe gelöst wird durch Verwendung von mechanischen Schaumzerstörern mit rotierenden Teilen.

Gegenstand der vorliegenden Erfindung ist daher ein Verfahren zur Schaumzerstörung bei der Herstellung von Polymerdispersionen (einschließlich Suspensionspolymerisaten), das dadurch gekennzeichnet ist, dass man einen mechanischen rotierenden Schaumzerstörer verwendet, der den Schaum ansaugt und verdichtet, oder der den Schaum und/oder eine Flüssigkeit ansaugt und radial auf den Schaum auf der Polymerdispersion schleudert. Man verwendet vorzugsweise einen Schaumzerstörer, der einen Rotor aufweist, in welchem Kanäle mit achsnaher Ansaugöffnung und achsferner Ausstossöffnung vorgesehen sind. Der Schaum und je nach Lage der Ansaugöffnung auch etwas Flüssigkeit, werden in die rotierenden Kanäle gesaugt und nach außen beschleunigt.

Als Schaumzerstörer sind insbesondere die oben genannten, zum Stand der Technik gehörenden Vorrichtungen brauchbar. Besonders bevorzugt ist ein Schaumzerstörer, der in Chem.-Ing.-Tech. 56 (1984) 839 - 844 beschrieben ist. Auf diese Publikation wird hiermit in vollem Umfang Bezug genommen. Der Schaumzerstörer ist ein Rotor, der die Form eines auf der Spitze stehenden Kegels oder Kegelstumpfes hat. In seinem Mantel sind Kanäle, die vorzugsweise rund sind, vorgesehen, die parallel zum Kegelmantel zur Kegelbasis führen. Der Schaumzerstörer wird unmittelbar unter dem Deckel eines Reaktors oder in einer Abgasleitung angebracht. Die herausgeschleuderte Flüssigkeit trifft dann auf den Deckel und wird so umgelenkt, dass kein neuer Schaum erzeugt wird. Der Schaum wird in den Kanälen durch die Einwirkung der Coriolis-Kraft verdrillt, gewalkt und entwässert, so dass er die Kanäle als eine bis zum fließfähigen Zustand verdichtete Dispersion aus Gas und Flüssigkeit verlässt.

Ein weiterer bevorzugter Schaumzerstörer ist der EKATO-Foamjet. Es handelt sich dabei um ein aus mehreren Platten bestehendes Laufrad, das oberhalb der Flüssigkeits- bzw. Schaumoberfläche rotiert. Der Schaum wird in axialer Richtung angesaugt, umgelenkt und in radialer Richtung beschleunigt. Die einwirkenden Scherkräfte führen zur Zerstörung der Schaumlamellen. Aus dem Schaumzerstörer treten Gas sowie Flüssigkeit bzw. flüssigkeitsreicher Sekundärschaum aus. Die Flüssigkeitsteilchen verlassen das Laufrad mit großer Geschwindigkeit und zerstören den über den gesamten Behälterquerschnitt aufsteigenden Schaum.

Eine Alternative zum alleinigen Ansaugen von Schaum besteht darin, dass der Schaum zusammen mit einer Fremdflüssigkeit oder eine Fremdflüssigkeit alleine angesaugt wird (Fremdberieselung). Die Fremdflüssigkeit eröffnet die Möglichkeit, einerseits zur Schaumzerstörung beizutragen, die überraschenderweise ohne Koagulatbildung erfolgt, und andererseits ein Antischaummittel oder Rezepturbestandteile einzubringen. Die Flüssigkeit wird fein verteilt auf der gesamten Querschnittsfläche des Kessels, d. h. auf die Flüssigkeitsoberfläche, aufgebracht und dadurch schneller eingemischt. Man kann auf diese Weise beispielsweise folgende Zusatzstoffe rasch und bequem in den Reaktor eindosieren oder gleichmäßig und effektiv durch das Versprühen verteilen:
- Polymerisationsinitiatoren;
- Redoxsysteme zur Nachbehandlung und Herabsetzung der Restmonomerenkonzentration;
- Polymerisationsinhibitoren und -stopper, die beispielsweise im Notfall zugegeben werden können;
- reaktive Komponenten, die während der Polymerisation schnell und gleichmäßig zugegeben werden sollen.

Beispiele für derartige reaktive Komponenten sind:
- Reaktive Monomere, die beispielsweise gegen Ende der Polymerisation zugegeben werden, um zu Kern-Schale-Teilchen zu kommen;
- Polymerisationsregler und
- Tenside oder eine Polymersaat, die während der Polymerisation zugegeben werden, um gezielt zu einer zweiten Teilchengeneration zu kommen;
- Pufferungsmittel, beispielsweise Ammoniakwasser oder Natronlauge, die auf diese Weise schnell und wirkungsvoll eingebracht werden können, wobei die Ausbildung von Konzentrationsgradienten an der Einlaufstelle weitgehend vermieden wird.

Wie eingangs hervorgehoben, betrifft die vorliegende Erfindung ein Verfahren zur Schaumzerstörung bei der Herstellung von Polymerdispersionen (einschließlich Suspensionspolymerisaten) im weitesten Sinne, d. h. sowohl bei der Vorbehandlung und den Vorstufen der Polymerisation als auch während der eigentlichen Polymerisation und der Nachbehandlung. So können erfindungsgemäß störende Schäume beseitigt oder vermindert werden, die auftreten
(a) bei tensidreichen Dispersionen, insbesondere dann, wenn die Oberfläche der Dispersionspartikel vollständig mit Tensidmolekülen belegt ist;
(b) bei Dispersionen, welche zu Beschichtungszwecken mit Tensiden beaufschlagt werden, die zu niedriger Grenzflächenspannung der Dispersion führen;
(c) bei Nachbehandlungen von Dispersionen, bei denen diese intensiv gerührt und Additive eingemischt werden;
(d) bei Nachbehandlungen mit Wasserdampf unter Schaumbildung durch aufsteigende Dampfblasen;
(e) beim Einlaufen oder Einsprühen in evakuierte Behälter;
(f) beim Emulgieren von Monomeren in Tensidlösungen;
(g) beim Entspannen einer Dispersion oder Emulsion auf Normaldruck.

Die Erfindung ist bevorzugt anwendbar bei solchen Polymerdispersionen, die ausreichend stabil sind, um später über eine Pumpe gefördert werden zu können, d. h. die eine gute Scherstabilität aufweisen.

Durch den Einbau eines mechanischen Schaumzerstörers geht scheinbar ein Teil des nutzbaren Reaktorvolumens verloren, denn der Schaumzerstörer muß sich oberhalb der Flüssigkeitsoberfläche befinden. Weil der Schaumzerstörer aber den sich bildenden Schaum beseitigt, der in der Regel ein größeres Volumen einnimmt als der Schaumzerstörer, bedeutet die Verwendung eines solchen Geräts in Wirklichkeit eine Vergrößerung des nutzbaren Reaktorvolumens. Zweckmäßigerweise sind Geometrie und Größe des Schaumzerstörers an den Reaktor angepasst.

Was die Reinigung der Apparatur angeht, so ergibt sich bei der Fremdberieselungsvariante der Vorteil, daß die Zuleitungen durch den fortgesetzten Zufluß von neuer Lösung dauernd freigespült werden. Bei Eigenberieselungsvariante kann nach Abschluss des Verfahrensschrittes das zum Reinigen des Behälters notwendige Spülwasser über den Schaumzerstörer sehr effektiv eingesprüht werden, wodurch eine Eigenreinigung des Schaumzerstörers erfolgt.

Die Polymerdispersionen, die sich erfindungsgemäß entschäumen lassen, können insbesondere durch Suspensions- oder Emulsionspolymerisation hergestellt werden.

Die Polymerdispersionen können mono- oder polymodal sein und breite oder enge Teilchengrößenverteilung besitzen.

Die Glastemperatur der erhaltenen Polymere liegt im allgemeinen im Bereich von -100 °C bis +150 °C, bevorzugt -60 °C bis +70 °C.

Erfindungsgemäß können die Monomere als vorzugsweise wässrige, Emulsion oder Lösung in Wasser oder einem geeigneten organischen Lösungsmittel in den Reaktor geleitet werden. Gemäß einer besonderen Variante der Erfindung werden die Monomere für die Emulsionspolymerisation als solche (in Substanz) in den Reaktor geführt. Mehrstufenrührer haben sich als geeignet erwiesen, das Emulgieren, d. h. das Zerkleinern von Tropfen, der Monomere in der wässrigen Phase im Reaktor in Anwesenheit von Emulgatoren oder Schutzkolloiden zu bewirken.

Die Monomere und/oder Reaktionspartner und/oder Hilfsstoffe können sowohl von oben durch den Reaktordeckel, durch die seitlichen Reaktorwände oder, vorzugsweise, von unten durch den Reaktorboden in den Reaktor geleitet werden. Letzteres hat den Vorteil, dass die Bildung von Wandbelägen geringer ist und dass das Einmischen schneller erfolgt. Ausserdem wird der Suspendier- bzw. Emulgierprozess durch den Dichteunterschied unterstützt und, es ist weniger Schaumbildung zu beobachten.

Für die Polymerisation geeignete ethylenisch ungesättigte Monomere sind insbesondere C₂-C₂₀-α-Olefine, wie Ethylen und Propylen, vinylaromatische Verbindungen, wie Styrol, α-Methylstyrol oder Vinyltoluole, C₁-C₁₂-Alkylvinylether, wie Methyl- oder Ethylvinylether, Vinylester von C₁-C₁₈-Monocarbonsäuren, wie Vinylacetat oder Vinylpropionat, Ester von α,β-ethylenisch ungesättigten Mono- oder Dicarbonsäuren, wie Acryl-, Methacryl- oder Maleinsäure, mit C₁-C₁₂-Alkanolen, wie Methanol, Ethanol, n-Propanol, iso-Propanol, 1-Butanol, 2-Butanol, iso-Butanol, tert.-Butanol und 2-Ethylhexanol, Acrylnitril, Methacrylnitril, Butadien, Isopren, Vinylchlorid, Vinylidenchlorid, α,β-ethylenisch ungesättigte C₃-C₆-Mono- und Dicarbonsäuren, wie Acrylsäure und Methacrylsäure und deren Amide, wie Acrylamid und Methacrylamid und deren N-Methylolverbindungen.

Erfindungsgemäß wird der Schaumzerstörer vorteilhaft zur Herstellung von Dispersionen, insbesondere Styrol-Butadien-Dispersionen, Styrol-Acrylat-Dispersionen oder Acrylat-Dispersionen verwendet. Vorteilhaft werden Dispersionen mit breiter Teilchengrößenverteilung und/oder Dispersionen mit einer Viskosität von 30 bis 500 mPas hergestellt.

Bevorzugte Polymerisate sind
- Homo- oder Copolymerisate der Acrylsäure- und Methacrylsäureester, insbesonders von Methyl-, Ethyl-, Butyl-, Ethyl-hexylacrylat, Hydroxyethyl- und Hydroxypropyl-acrylsäureester und -methacrylsäureester
- Homo- oder Copolymerisate des Styrols mit Butadien und/oder (Meth)acrylnitril und/oder den erwähnten (Meth)acrylsäureestern
- Homo- oder Copolymerisate des Vinylacetates und/oder Vinylpropionates mit Ethylen, Butadien oder den erwähnten (Meth)acrylsäureestern.
- Homo- oder Copolymerisate des Vinylchlorids und/oder Vinylidenchlorids mit den erwähnten (Meth)acrylsäureestern, Olefinen oder Vinylaromaten
- Homo- oder Copolymerisate der Acrylsäure, Methacrylsäure oder Maleinsäure mit anderen Säuren oder Säureanhydriden wie Maleinsäure(anhydrid), (Meth)Acrylamid, und/oder Olefinen.

Die Polymerisationstemperatur beträgt üblicherweise 30 bis 140 °C. Zur Einleitung der Emulsionspolymerisation werden die gebräuchlichen wasserlöslichen Radikalbildner in einer Menge von vorzugsweise 0,05 bis 3 Gew.-%, bezogen auf die Monomerphase, eingesetzt. Beispiele für Radikalbildner sind Peroxide, wie Ammoniumperoxodisulfat, Kaliumperoxodisulfat, Wasserstoffperoxid, Mono- oder Diacylperoxide oder Alkylhydroperoxide sowie Azoverbindungen. Die Initiierung kann entweder direkt durch Temperaturerhöhung oder durch Einsatz von Reduktionsmitteln erfolgen (Redoxsystem).

Als Dispergiermittel können die bei der Emulsionspolymerisation gebräuchlichen ionischen und nichtionischen Emulgatoren oder Schutzkolloide eingesetzt werden. Vorzugsweise werden 0,1 bis 5,0 Gew.-% Emulgator, bezogen auf die Monomerphase, eingesetzt. Gegebenenfalls können zur Polymerisation noch Puffersubstanzen wie Natriumcarbonat, Natriumhydrogenphosphat oder Alkaliacetate oder Polymerisationsregler oder vernetzend wirkende Monomere wie Bisacrylate oder N-Methylolverbindungen eingesetzt werden.

Die Polymerisation kann kontinuierlich oder diskontinuierlich, mit oder ohne Verwendung von Saatlatices, unter Vorlage aller oder einzelner Bestandteile des Reaktionsgemisches oder unter teilweiser Vorlage und Zulauf der oder einzelner Bestandteile des Reaktionsgemisches oder nach einem Anlaufverfahren ohne Vorlage durchgeführt werden.

Als besonders geeignet erweist sich ein Schaumzerstörer auch bei der chemischen Nachbehandlung oder Konfektionierung einer Polymerdispersion oder auch bei der Behandlung und/oder durch Mischung einer Polymerdispersion mit Wasserdampf, Luft, Kohlendioxid, Stickstoff oder reaktiven Komponenten, wie Schwefeldioxid, Kohlenmonoxid, Ammoniak oder Ozon.

Nähere Angaben zur Polymerisation ethylenisch ungesättigter Verbindungen finden sich beispielsweise in Houben-Weyl, Band XIV/1, Makromolekulare Stoffe, Georg Thieme Verlag, Stuttgart, 1961.

Als Polykondensation ist insbesondere die Herstellung von Polyestern, Polyamiden und Kondensationsharzen und als Polyaddition insbesondere die Polyurethanbildung zu erwähnen. Nähere Angaben hierzu finden sich in Houben-Weyl, Band XIV/1, Makromolekulare Stoffe, Georg Thieme Verlag, Stuttgart, 1961.

Die Erfindung wird nachfolgend an Hand von Beispielen weiter erläutert.

### Beispiele:

- Emulgator 1:: 20 Gew.-%ige Lösung eines p-Octylphenolethoxilates mit 25 mol Ethylenoxid
- Emulgator 2:: 35 Gew.-%ige Lösung eines Natriumsalzes des sulfatierten p-Nonylphenolethoxilates mit 25 mol Ethylenoxid

### Beispiel 1 :

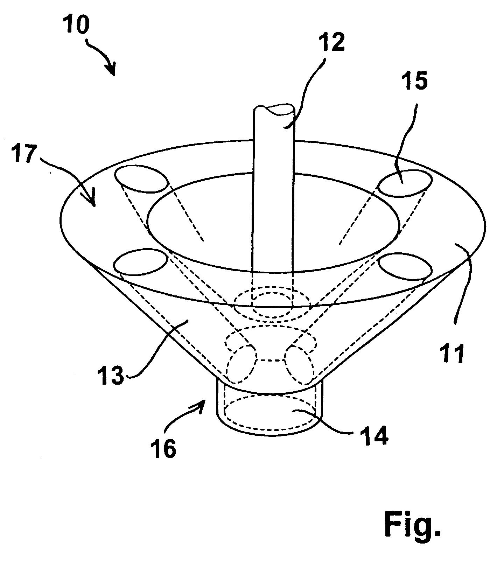

Der Versuch wird in einem 18 m³ Reaktor mit h/D = 2,1 (Verhältnis Höhe/Durchmesser), versehen mit Blattrührer, d/D = 0,58 (= Durchmesserverhältnis Rührblatt/Reaktor) und 35 UpM durchgeführt. Im oberen Bereich des Reaktors wird ein Schaumzerstörer der in der Figur gezeigten Art eingebaut. Er besteht bei der dargestellten Ausführungsform aus einem Rotor 10, dessen Körper 11 als ein um eine die Drehachse bildende Antriebswelle 12 rotationssymmetrischer, umgekehrter Kegel ausgebildet ist. In dem Rotorkörper 11 sind mehrere Kanäle 13 mit rundem Querschnitt ausgespart, die an der Kegelspitze 16 in der Nähe der Drehachse Ansaugöffnungen aufweisen bzw. in eine gemeinsame Ansaugöffnung 14 münden. Die Kanäle 13 enden in Ausstossöffnungen 15 in der Basis 17 des Kegels. Das Verhältnis d/D (d = Durchmesser des Schaumzerstörers; D = Durchmesser des Reaktors) ist 0,5. Eine Vorlage bestehend aus 2200 kg Wasser und 10 kg Ascorbinsäure wird auf 80 °C erhitzt. Bei Erreichen von 70 °C Innentemperatur werden 200 kg Natriumpersulfatlösung (2,5 Gew.-%ig) zugegeben. Danach wird begonnen, den Zulauf der Monomeremulsion ME1 kontinuierlich in 210 min und 1740 kg Natriumpersulfatlösung in 240 min zuzugeben, wobei man die Innentemperatur auf 85 °C ansteigen lässt. Während der Zugabe wird der Schaumzerstörer in Rotation versetzt und die Drehzahl, die erforderlich ist, um den Schaum sicher zu zerstören, wird einreguliert. Während der Zuläufe wird die Mantelkühlung bis an die Kühlgrenze beansprucht. Nach vollständiger Zugabe wird 2 h bei 85 °C gehalten, abgekühlt, mit Ammoniak-Lösung neutralisiert und über ein 250 µm Filter filtriert. Nach Abfiltrieren von rund 5,7 kg Koagulat wird eine Dispersion mit einem Feststoffanteil von 55,7 %, einem pH von 7,3, einem LD-Wert (LD = Lichtdurchlässigkeit, gemessen mit Weißlicht, 0,01 gew.-%ig, 25 mm Schichtdicke) von 52 %, einer Viskosität von 77 mPas und einem Feinkoagulatanteil von 0,017 % erhalten. Die Reaktorwand ist stellenweise mit Wandbelag belegt. Der Schaumzerstörer ist belagfrei, seine Kanäle sind frei. Die Teilchengrößenverteilung ist tetramodal.

### Zusammensetzung von ME1:

- 1900 kg Wasser
- 1940 kg Emulgator 1
- 1400 kg Emulgator 2
- 194 kg Acrylsäure
- 1160 kg Acrylnitril
- 8315 kg Butylacrylat

### Beispiel 2:

Beispiel 1 wird in einem 18 m³ Reaktor gleicher Bauart, mit dem gleichen Schaumzerstörer und mit einem 4 stufigen MIG-Rührer mit um 90 °C gegeneinander verdrehten Rührblattstufen wiederholt. Die Rührerdrehzahl wird auf 40 UpM gesteigert und die gesamte Kühlkapazität ausgenutzt. Dabei kann die Zulaufszeit der Monomeremulsion auf 180 min reduziert werden; die Initiatorlösung wird, analog Beispiel 1, 30 min länger zugefahren. Danach wird wie bei Beispiel 1 verfahren. Es wird eine koagulatfreie Dispersion mit einem Feststoffanteil von 55,4 %, einem pH von 7,5, einem LD-Wert von 50 %, einer Viskosität von 80 mPas und einem Feinkoagulatanteil von 0,001 % erhalten. Die Teilchengrößenverteilung ist tetramodal. Es findet sich kein Belag an Reaktorwand und Schaumzerstörer.

### Beispiel 3:

Im Reaktor aus Beispiel 1 mit einem EKATO-FOAMJET-Schaumzerstörer wird mit 40 UpM ein Gemisch aus 1980 kg Wasser und 11 kg Ascorbinsäure auf 82 °C erhitzt. Bei Erreichen von 70 °C Innentemperatur werden 230 kg Natriumpersulfatlösung (2,5 Gew.-%ig) zugegeben. Danach wird der Schaumzerstörer in Gang gesetzt und begonnen, den Zulauf der Monomeremulsion ME3 kontinuierlich in 7 h und 730 kg Natriumpersulfatlösung (7 Gew.-%ig) in 7,25 h zuzugeben. Während der Zuläufe wird die Mantelkühlung bis an die Kühlgrenze beansprucht. Nach vollständiger Zugabe wird 2,5 h bei Polymerisationstemperatur gehalten und über ein 250 µm Filter filtriert. Nach Abfiltrieren von Koagulat wird eine Dispersion mit einem Feststoffanteil von 65,7 %, einem pH von 4,6, einem LD-Wert von 36 %, einer Viskosität von 250 mPas und einem Feinkoagulatanteil von 0,010 % erhalten. Die Reaktorwand ist leicht mit Wandbelag belegt. Die Teilchengrößenverteilung ist trimodal.

### Zusammensetzung von ME3:

- 1915 kg Wasser
- 750 kg Emulgator 2
- 227 kg Acrylsäure
- 567 kg Acrylnitril
- 794 kg Vinylacetat
- 9956 kg Butylacrylat

### Beispiel 4:

Beispiel 3 wird wiederholt mit der Abänderung, dass die erhaltene Dispersion nach vollständiger Zufuhr der Zuläufe 2,5 h nachpolymerisiert wird und dabei 270 kg 10 gew.-%ige tert.-Butylhydroperoxidlösung und nach 5 min eine Lösung von 170 kg 10 gew.-%ige Lösung von Natriumhydroxymethylsulfinsäure (Rongalit C) über den Schaumzerstörer angesaugt und in 1 h zugegeben werden. Danach liegt der Anteil an Restmonomeren in Summe unter 500 ppm. Die Teilchengrößenverteilung ist wie in Beispiel 3.

## Patentansprüche

1. Verfahren zur Schaumzerstörung bei der Herstellung von wässrigen Polymerdispersionen, dadurch gekennzeichnet, dass man einen mechanischen rotierenden Schaumzerstörer verwendet, der den Schaum ansaugt und verdichtet, oder der den Schaum und/oder eine Flüssigkeit ansaugt und radial auf den Schaum auf der Polymerdispersion schleudert.

2. Verfahren nach Anspruch 1, dadurch gekennzeichnet, dass man einen Schaumzerstörer verwendet, der einen Rotor aufweist, in welchem Kanäle mit achsnaher Ansaugöffnung und achsferner Ausstossöffnung vorgesehen sind.

3. Verfahren nach Anspruch 2, dadurch gekennzeichnet, dass man einen Schaumzerstörer verwendet, dessen Rotor im wesentlichen in Form eines auf der Spitze stehenden Kegels ausgebildet ist.

4. Verfahren nach Anspruch 1, dadurch gekennzeichnet, dass man einen Schaumzerstörer verwendet, bei dem der Schaum und/oder die Flüssigkeit angesaugt, umgelenkt und in radialer Richtung beschleunigt und weggeschleudert wird.

5. Verfahren nach Anspruch 1 oder 4, dadurch gekennzeichnet, dass die angesaugte Flüssigkeit ein zusätzlich einzubringendes flüssiges Antischaummittel ist und/oder Rezepturbestandteile enthält.

6. Verfahren nach einem der vorhergehenden Ansprüche, dadurch gekennzeichnet, dass der Schaumzerstörer bei der Herstellung einer Polymerdispersion durch Emulsionspolymerisation während der Polymerisation verwendet wird.

7. Verfahren nach einem der Ansprüche 1 bis 5, dadurch gekennzeichnet, dass der Schaumzerstörer bei der Nachbehandlung einer durch Emulsionspolymerisation hergestellten Polymerdispersion verwendet wird.

8. Verfahren nach Anspruch 7, dadurch gekennzeichnet, das man als angesaugte Flüssigkeit eine zusätzliche Komponente eines Redoxsystems zur Absenkung von Restmonomeren verwendet.

9. Verwendung eines an sich bekannten mechanischen rotierenden Schaumzerstörers zum Entschäumen bei der Herstellung von Polymerdispersionen.
